# EUROPEAN PATENT SPECIFICATION

(11) **EP 1 984 246 B1**
(45) Date of publication and mention of the grant of the patent: **27.06.2012**
(21) Application number: 07703469.2
(22) Date of filing: 14.02.2007
(51) Int. Cl.: B64D 11/00, G09F 9/33

(54) **VISUALISATION SYSTEM IN AN AIRCRAFT**
VISUALISIERUNGSSYSTEM IN EINEM FLUGZEUG
SYSTEME DE VISUALISATION DANS UN AVION

(30) Priority: 16.02.2006 DE 102006007285; 16.02.2006 US 774154 P
(43) Date of publication of application: 29.10.2008
(73) Proprietor: Airbus Operations GmbH, 21129 Hamburg (DE)
(72) Inventor: STAVAEUS, Mikael, S-121 43 Johanneshov (SE); WISCH, Bodo, 28309 Bremen (DE); SÜSS, Wolfgang, 22765 Hamburg (DE); ROWOLD, Lars, 26316 Varel (DE)
(74) Representative: Kopf, Korbinian Paul
(86) International application number: PCT/EP2007/001284
(87) International publication number: WO 2007/093403

(56) References cited:
- EP-A- 1 650 127
- EP-A1- 0 913 325
- WO-A-02/10809
- US-A- 6 030 715
- US-A1- 2004 032 727
- US-A1- 2004 097 005
- US-B1- 6 424 386
- US-B1- 6 504 565

## Description

### Technical Field

The present invention generally relates to the technical field of equipment installation in an aircraft. In particular, the invention relates to a visualisation system in the passenger cabin of an aircraft, by means of which visualisation system data relating to informing, instructing and entertaining passengers can be visually presented, as can graphic effects. Furthermore, the invention relates to an aircraft equipped with a visualisation system according to the invention.

### Background to the invention

Long-distance flights over several hours can frequently be lengthy and monotonous, which is why in older types of large-capacity passenger aircraft only a few monitors or flat-panel monitors are arranged, distributed in the cabin, for entertaining, instructing and informing passengers. However, these monitors are often arranged such that only a few passengers have an unrestricted view of the monitors.

Furthermore, in particular in newer types of large-capacity passenger aircraft, in particular in first class and in business class, it is common for the backrests of the passenger seats to comprise small flat-panel monitors, on which the person seated behind can call up information or view entertainment programs. However, these monitors are associated with considerable weight, which is of course always undesirable in the field of aircraft and space technology.

Moreover, both the monitors arranged so as to be distributed in the cabin, and the flat-panel monitors arranged in the backrests are associated with disadvantages in that they are very small, and thus due to their size cannot offer passengers the full experience of a program or feature film when viewed on these monitors.

EP 0 913 325 A1 discloses an aircraft having a window-free passenger cabin and an outside camera and an inside display for providing images formed by the camera.

US 2004/0097005 A1 discloses an organic light active device.

### Presentation of the invention

Based on the disadvantages associated with known information- and entertainment systems, as described above, it may be a need of the present invention to state a visualisation system that is less heavy and that can be seen almost equally well from any seat.

According to a first aspect of the present invention, the need of the invention may be met by a passenger cabin including a visualisation system according to claim 1. In this arrangement the visualisation system according to the invention comprises a lining panel that is normally used to line the ceiling of a passenger cabin. Furthermore, the visualisation system comprises a control unit that is equipped to process, for the visualisation system, the data intended for visual presentation in order to provide such data in processed form to the visualisation system. In order to be able to visually or graphically present information relating to information, instruction, entertainment, or to visually present graphic effects, the visualisation system may further comprise a flexible display by means of which the lining panel is coated. This flexible display is coupled to the above-mentioned control unit, which is correspondingly adapted to supply electricity in a targeted manner to the flexible display, for the purpose of presenting the above-mentioned information or effects.

Since the surface of lining panels often comprises special ornamental patterns or elaborate surface characteristics, it can of course be desirable for the resulting aesthetic quality of the surface of the lining panels not to be impeded as a result of it being coated with a display, which is why the display can have a translucent character so that the display is not visible to the outside even when it is not supplied with electricity, but instead the surface characteristics of the lining panel remain visible.

Such a translucent display can, for example, be made from a multitude of light emitting diodes. In particular the translucent display of the visualisation system can comprise a multitude of organic light emitting diodes (OLEDs), which can, for example, be applied directly to the lining panel, in the form of a coating.

As an alternative to the above, the organic light emitting diodes can also be applied to a transparent flexible substrate as a carrier material, for example a polymer film, glass or quartz, which carrier material is then used to coat the lining panel. With the use of flexible displays in the form of polymer films that are, for example, coated with OLEDs, surfaces that comprise any desired curvatures can be coated with a display for reproducing information. Of course the display films can also be laminated onto the surfaces. Due to their flexibility, their thinness and their light weight, displays that use, for example, polymer films as a carrier material are ideal for application to convex or concave surfaces of the cabin interior.

Instead of coating the outside of the lining panel with the display, it is of course also possible to create an area-shaped recess on the surface of the lining panel and to embed the flexible display in said area-shaped recess. While the above-mentioned OLED displays are as a rule very flat, such a design in which the display is embedded in the surface of the lining panel makes it possible to create an even surface without any uneven areas worth mentioning.

In the case of organic light emitting diodes (hereinafter referred to as OLEDs), these can be light emitting diodes made of organic semiconducting polymers or small molecules that can be produced far more economically than inorganic LEDs. By arranging a multitude of small OLEDs it is, for example, possible to create a graphic display as proposed for use in the context of the present invention. In addition, the OLEDs applied to the lining panel can also be used for illumination purposes, for example in order to create particular illumination scenarios in the aircraft cabin. Since a display constructed in this way with the use of OLEDs, in contrast to conventional liquid-crystal display monitors, does not need background illumination, the display can be designed so as to be translucent, which in the context of the present invention is desirable so as not to negatively affect the surface characteristics of the lining panel. Apart from this, the fact that no background illumination is needed has a positive effect on the weight of the display so that considerable weight can be saved when compared to conventional liquid-crystal display monitors.

A display produced with the use of OLEDs further features a large angle of view region of up to 170° and a fast switching speed, so that a display produced in this way is suitable to reproduce moving images. Furthermore, if they are made as coated films, OLED displays are thin and flexible so that they can also be used on curved surfaces as they occur throughout the passenger cabin region.

Due to the flexible nature of displays with OLEDs, in particular lining panels in the curved cabin ceiling region of a passenger cabin can be coated with a display produced with the use of OLEDs so that on the ceiling of the aircraft cabin certain scenarios can be produced by means of the displays, which scenarios simulate, for example, the open sky or similar, as a result of which scenarios passengers can enjoy a unique flight experience.

According to a further aspect of the invention, the visualisation system comprises a server computer or central computer that is equipped with a storage unit in which a multitude of different applications, entertainment media or graphic effects can be stored, which can be presented or played on the display of the visualisation system. To this effect, by accessing the applications stored in the storage unit, the server computer provides image data to the control unit, which in turn converts this image data to corresponding control signals.

In order to convert the image data to control signals, the control unit can, for example, comprise at least one display controller with a microprocessor, which recalculates the image data that has been provided by the server computer to form a matrix scheme that may be used as a basis for supplying electrical current to the display. In this arrangement each display controller has an ID of its own so as to be able to be identified and addressed by the server computer so that the display controllers can by fed with (image-) data by the server computer. In this arrangement, recalculating the image data to form a matrix scheme takes place by means of the microprocessor, because the individual organic diodes of the display are arranged in a corresponding manner in a line-column matrix so that a specific line number or column number can be allocated to each individual diode, which diode emits a coloured light when a voltage is applied.

Since it is not always desirable to display the same information or the same graphic effects on each display, a particular group of displays or lining panels can have a display controller of their own allocated to them. In this case, apart from its functionality to control the display, the display controller can also have a further functionality that makes it possible to address the server computer in order to select a particular application by means of the display controller, which application is to be displayed on a group of lining panels or on the displays fitted to said lining panels.

Since, in particular in the presentation of entertainment programs such as feature films or animation for entertainment purposes, moving images have to be visually presented, each display controller is coupled to the server computer by way of a data bus that is equipped to implement or ensure real-time data transmission. Such a data bus can, for example, be a network system, for example the Airbus CIDS cabin management system, which can be installed as a central control unit in an aircraft. To provide multimedia contents, the system can be designed as a streaming solution. Normally this cabin management system controls important cabin functions and handles the display of status information for passengers and the crew, and can thus without major modifications be used to transmit image data.

For the purpose of inputting information the OLED display can comprise a touch screen functionality. In this way a user can make a selection of objects by touching the display.

The server computer required for the visualisation system can be implemented as part of an existing computer in the aircraft, or as a separate computer (high-performance hardware). In this arrangement the central computer is integrated into or connected to the network of the aircraft, such as for example into or to the CIDS, in order to make it possible to use flight data in various applications. The display controller can be designed as a streaming client in order to process the information provided by the server.

With the visualisation system according to the invention various types of information can be presented in the passenger cabin, information such as, for example, flight data and travel data, entertainment information, geographic information or illumination scenarios. For example, by accessing a GPS application, information relating to the distance and direction of geographic or astronomical situations can be presented so that flight passengers are always graphically informed about their actual position.

Generally speaking, the range of possible applications that can be presented on the displays is vast, so that below only some options are mentioned by way of examples. For example, graphic effects to present a sky, for example with clouds and the influence of the effects of light and shade, can be generated so that the visual impression of the cabin can be widened and the impression of an open space is generated, which can lead to a visual opening-up of the entire aircraft structure. Furthermore, particular times of day can be simulated, for example to actively counteract the effects of jetlag. Furthermore, flying objects or celestial objects, for example, aircraft, birds or stars, or unrealistic situations to entertain passengers, for example the animation of a window cleaner, can be visually presented, which can contribute to passengers' entertainment and to passing the time so as to make a flight less monotonous. Furthermore, various illumination scenarios can be presented with the displays in order to, in a positive manner, act on passengers' frames of mind. Finally, of course general flight information can also be displayed, such as, for example, flight altitude, speed and distance; seat numbers, safety information; information relating to emergency exits; information relating to onward flight connections, depending on the particular passenger seated close to the visualisation system concerned.

Since sooner or later aircraft manufacturers will produce blended wingbody aircraft that will no longer have any windows but instead a far wider cabin, the effect of artificially created windows, window strips and any imaginable window shapes is particularly interesting because otherwise the passenger gains the impression of being seated in a completely closed space, which in flight can lead to a state of anxiety. In order to counteract this, by means of the invention, the interior linings of the passenger cabin can be coated with flexible displays on which the view from the cabin is artificially simulated so that a passenger gains the impression of actually looking out of a window.

By arranging the translucent flexible displays preferably on the cabin ceiling panels, a positive effect can be achieved in that passengers can enjoy the graphic effects, for example of a feature film shown on the displays, while lying down, which can contribute to the best possible passenger relaxation.

### Brief description of the drawings

Below, the present invention is explained by way of an example with reference to the enclosed drawings. It should be emphasised that the embodiments of the invention as shown in the figures explain the invention merely by way of an example and should in particular not be interpreted in any way as limiting the scope of protection. The following are shown:
- Fig. 1: a three-dimensional view of a passenger cabin whose ceiling comprises a visualisation system according to the invention;
- Fig. 2: a system overview of the visualisation system according to the invention;
- Fig. 3: two different options for fitting the flexible displays; and
- Fig. 4: the basic design of an OLED light emitting diode.

### Description of exemplary embodiments of the invention

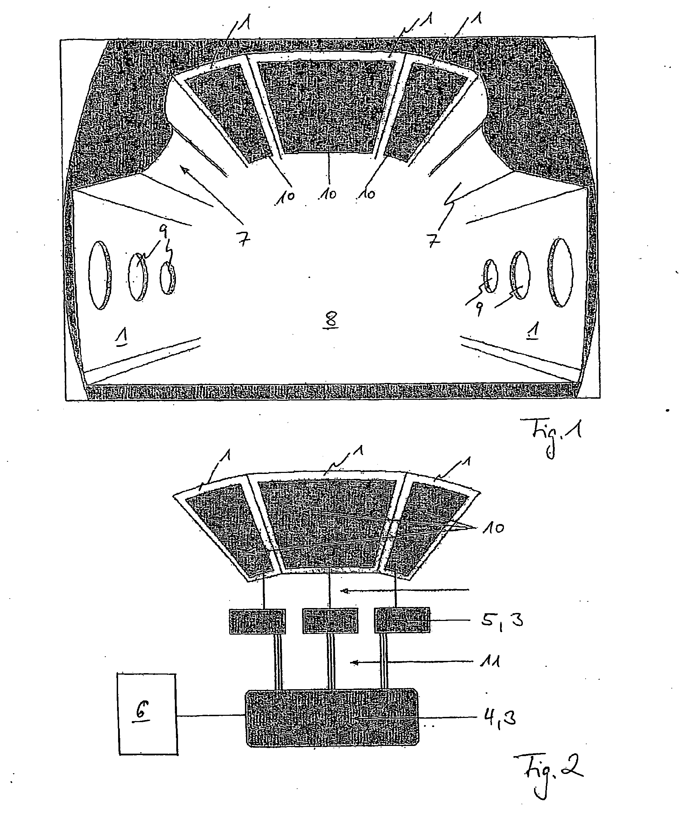

Fig. 1 shows a view of the interior of a passenger cabin 8. The passenger cabin 8 is shown diagrammatically without any interior equipment components such as, for example, seats. The passenger cabin 8 is laterally delimited by lining panels 1 in which aircraft windows 9 are fitted at regular spacing. Towards the top the passenger cabin 8 is delimited by a cabin ceiling in the form of three fitting panels 1 that abut against each other at their front faces. In the transition region between the lateral linings 1 and the cabin ceiling there are hatracks 7, which for the purpose of these explanations are shown diagrammatically only.

As shown in Fig. 1, in the region of the cabin ceiling the lining panels 1 comprise translucent flexible displays 10 on which various visual effects or for example entertainment media can be played, as will be explained below with reference to the additional figures. Due to their flexibility the displays 10 can easily be made to match the concave form of the cabin ceiling. For example, passenger information such as, for example, seat numbers or information relating to emergency exits can be shown on the displays 10. Likewise, by means of the displays 10, reproductions of the sky can be generated so as to convey the impression of an open space, which can result in visually opening up the aircraft structure. Fitting the displays 10 to the cabin ceiling panels 1 can in particular be advantageous in that passengers can in a very relaxed state look at the displays 10 in a reclined position, with their seat rests in their downward position 1, and can enjoy in complete relaxation the impressions that the displays 10 are able to provide.

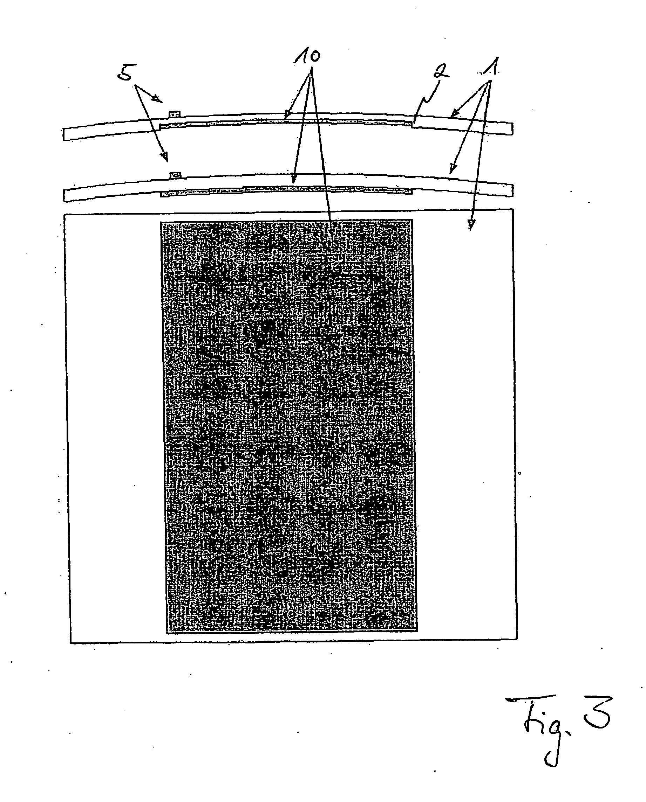

Fig. 2 shows a system overview of the visualisation system according to the invention. As shown in Fig. 2 the visualisation system according to the invention comprises several lining panels 1, each being coated with a display 10. Furthermore, the visualisation system also comprises a control unit 3 that can, for example, comprise a server computer 4 and a multitude of display controllers 5. To provide the ability for the visualisation system to present certain information, entertainment media or graphic effects, the individual lining panels 1 are coated with translucent flexible displays 10. Such coating can, for example, be implemented by direct coating of the lining panels 1 with a multitude of organic light emitting diodes. As an alternative to this, coating can be implemented with the use of a film that is coated with OLEDs in columns and rows, as shown in Fig. 3.

As shown in Fig. 3, one option of coating the lining panels consists of simply gluing the displays 10 in the form of a flexible film to the underside of the lining panel 1, as shown in the middle diagram of Fig. 3. As an alternative to the above, it may be advantageous to form an area-shaped recess 2 in the lining panel 1 in order to embed the translucent display 10 therein so that an essentially flat surface is created (top diagram of Fig. 3).

As shown in Fig. 2, each individual translucent flexible display 10 is coupled to the control unit 3 in order to cause the display 10 to present the desired information, which can, for example, be stored in a storage unit on the server computer 4. In order to be able to present the image information, which is stored on the server computer 4, by means of the lining panel 1 that has been coated with OLEDs, a display controller 5 is connected between the display 10 of the respective lining panel 1 and the server computer 4, which display controller 5 recalculates the image data provided by the server computer 4 to create a matrix scheme, so that, depending on this matrix data, electrical current can be applied to the OLEDs that are arranged on the lining panel 1 in columns and rows.

As shown in Fig. 2, several display controllers 5 can be connected to the server computer in order to be able to separately address the displays 10 of individual lining panels 1, and in order to be able to provide said displays 10 with various image data. In this way various types of information data, entertainment data or graphic effects can be presented on the displays 10 of different lining panels 1.

In this arrangement the individual display controllers 5 are thus coupled to the server computer 4 by way of a data bus 11, which is able to ensure real-time data transmission so that presentation of moving images is possible without any jerking or delay.

As shown in Fig. 2, the server computer is incorporated in the network system 6 of the aircraft, which network system 6 can, for example, be the Airbus CIDS cabin management system, which is installed as a central control unit in Airbus aircraft.

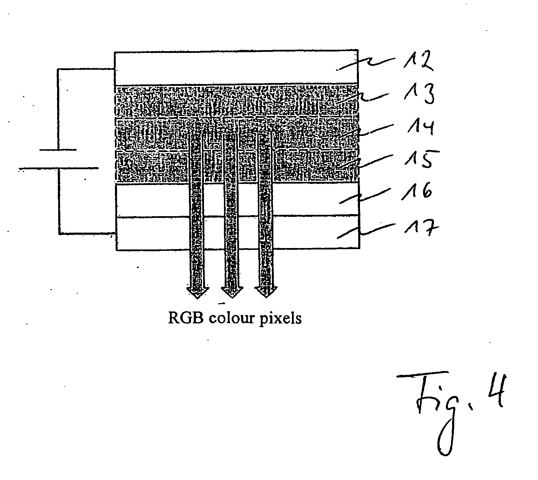

Finally, with reference to Fig. 4, the function of a display coated with OLEDs is described. For example an organic dye provides the key to the function of OLEDs. This dye has various states of excitation. If an electron coincides with a hole in the dye, an excited state may be created, from which a photon (light particle) can be emitted. The dye can also be excited by light, which can, for example, result in fluorescence.

The excited states are generated in a thin film 13 of the dye. Electrical current flows through this film 13 in the following manner: excited electrons on one side are fed to holes in the other side of the anode 16 by way of a metal cathode 12. The electrons and holes move into the dye 13, meet, and form excited states. In this process, typically, a voltage of approximately 5 to 10 volt is present between the metallic cathode 12 and the transparent anode 16. When the electrons "fall" into the holes (recombination), the desired light is emitted through the transparent substrate 17, which can, for example, be a film. The colour of this light depends on the energy released during this process.

In addition, it should be pointed out that "comprising" does not exclude other elements or steps, and "a" or "one" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

### LIST OF REFERENCE CHARACTERS

- 1: Lining panel
- 2: Recess
- 3: Control unit
- 4: Server computer
- 5: Display controller
- 6: Network system
- 7: Hatrack
- 8: Passenger cabin
- 9: Aircraft window
- 10: Display
- 11: Data bus
- 12: Cathode
- 13: Dye film
- 14: Exitone
- 15: Hole injection
- 16: Anode
- 17: Film

## Claims

1. A passenger cabin (8) of an aircraft including a visualisation system, the visualisation system comprising:
- a lining panel (1) to line the passenger cabin (8); and
- a control unit (3);
**characterized in that** the lining panel (1) is coated with a flexible display (10) that is coupled to the control unit (3) which, for the purpose of presenting information, is adapted to supply electricity in a targeted manner to the display (10), wherein the lining panel (1) is a ceiling panel.

2. The passenger cabin of claim 1,
wherein the flexible display (10) comprises a multitude of light emitting diodes.

3. The passenger cabin of claim 2,
wherein the flexible display (10) comprises a multitude of organic light emitting diodes.

4. The passenger cabin of claim 3,
wherein the display has a translucent character.

5. The passenger cabin of claim 3,
wherein the lining panel (1) is directly coated with the organic light emitting diodes.

6. The passenger cabin of claim 3,
wherein a film (17) is glued onto the lining panel, which film (17) in turn comprises a coating of organic light emitting diodes.

7. The passenger cabin of any one of the preceding claims,
wherein the lining panel (1) comprises on its surface an area-shaped recess (2) into which the flexible display (10) is embedded.

8. The passenger cabin of any one of the preceding claims, further comprising:
- a server computer (4) with a storage unit,
wherein the server computer (4), by accessing applications stored in the storage unit, provides image data to the control unit (3).

9. The passenger cabin of any one of the preceding claims,
wherein the control unit (3) comprises at least one display controller (5) with a microprocessor, which recalculates the image data that has been provided by the server computer (4) to form a matrix model that is used as a basis for supplying electrical current to the display.

10. The passenger cabin of any one of the preceding claims,
wherein a group of lining panels is allocated a display controller (5) of its own in order to generate a contiguous visual presentation on the group of lining panels.

11. The passenger cabin of claim 9 or 10,
wherein each one of the display controllers (5) is coupled to the server computer (4) by way of a data bus that is adapted to implement real-time data transmission.

12. The passenger cabin of claim 11, wherein each display controller (5) is adapted to request and receive, for the group of lining panels, individual application data from the server computer (4).

13. An aircraft comprising a passenger cabin according to the invention of any one of claims 1 to 12.

14. The use of a flexible display to coat a lining panel in the passenger cabin (8) of an aircraft for the visual presentation of graphic effects when the coated lining panel (1) is coupled to a control unit (3) which, for the purpose of presenting information, is adapted to supply electricity in a targeted manner to the display (10),
wherein the lining panel (1) is a ceiling panel.

## Patentansprüche

1. Passagierkabine (8) eines Flugzeug mit einem Visualisierungssystem, wobei das Visualisierungssystem aufweist:
- ein Verkleidungspanel (1) zur Auskleidung der Passagierkabine (8); und
- eine Steuereinheit (3);
**dadurch gekennzeichnet, dass** das Verkleidungspanel (1) mit einem flexiblen Display (10) beschichtet ist, das mit der Steuereinheit (3) gekoppelt ist, welche eingerichtet ist, um das Display (10) zur Darstellung von Informationen gezielt zu bestromen,
wobei das Verkleidungspanel (1) ein Deckenpanel ist.

2. Passagierkabine gemäß Anspruch 1,
wobei das flexible Display (10) eine Vielzahl an Leuchtdioden umfasst.

3. Passagierkabine gemäß Anspruch 2,
wobei das flexible Display (10) eine Vielzahl organischer Leuchtdioden umfasst.

4. Passagierkabine gemäß Anspruch 3,
wobei das Display einen transluzenten Charakter aufweist.

5. Passagierkabine gemäß Anspruch 3,
wobei das Verkleidungspanel (1) unmittelbar mit den organischen Leuchtdioden beschichtet ist.

6. Passagierkabine gemäß einem der Ansprüche 3,
wobei das Verkleidungspanel mit einer Folie (17) beklebt ist, welche ihrerseits mit den organischen Leuchtdioden beschichtet ist.

7. Passagierkabine gemäß einem der voranstehenden Ansprüche,
wobei das Verkleidungspanel (1) auf seiner Oberfläche eine flächige Ausnehmung (2) aufweist, in die das flexible Display (10) eingelassen ist.

8. Passagierkabine gemäß einem der voranstehenden Ansprüche, ferner aufweisend:
- einen Server-Computer (4) mit einer Speichereinheit,
wobei der Server-Computer (4) unter Rückgriff auf in der Speichereinheit gespeicherte Anwendungen die Steuereinheit (3) mit Bilddaten versorgt.

9. Passagierkabine gemäß einem der voranstehenden Ansprüche,
wobei die Steuereinheit (3) zumindest einen Displaycontroller (5) mit einem Mikroprozessor aufweist, welcher die von dem Server-Computer (4) bereitgestellten Bilddaten in ein Matrixschema umrechnet, auf dessen Grundlage die Bestromung des Displays erfolgt.

10. Visualisierungssystem gemäß einem der voranstehenden Ansprüche,
wobei einer Gruppe von Verkleidungspanelen jeweils ein Displaycontroller (5) zugeordnet ist, um auf der Gruppe von Verkleidungspanelen eine zusammenhängende Visualisierung zu erzeugen.

11. Visualisierungssystem gemäß Anspruch 9 oder 10,
wobei jeder der Displaycontroller (5) mit dem Server-Computer (4) über einen Datenbus gekoppelt ist, welcher eingerichtet ist, um eine Echtzeit-Datenübertragung umzusetzen.

12. Visualisierungssystem gemäß Anspruch 11,
wobei jeder Displaycontroller (5) eingerichtet ist, um für die Gruppe von Verkleidungspanelen individuelle Applikationsdaten von dem Server-Computer (4) anzufordern und zu empfangen.

13. Flugzeug, welches mit einem erfindungsgemäßen Visualisierungssystem gemäß einem der Ansprüche 1 bis 12 ausgestattet ist.

14. Verwendung eines flexiblen Displays zur Beschichtung eines Verkleidungspanels in der Passagierkabine (8) eines Flugzeugs zur Visualisierung graphischer Effekte wenn das beschichtete Verkleidungspanel (1) mit einer Steuereinheit (3) gekoppelt ist, welche eingerichtet ist, um das Display (10) zur Darstellung von Informationen gezielt zu bestromen,
wobei das Verkleidungspanel (1) ein Deckenpanel ist.

## Revendications

1. Cabine de passagers (8) d'un avion incluant un système de visualisation, le système de visualisation comportant :
- un panneau d'habillage (1) pour habiller la cabine de passagers (8), et
- une unité de commande (3),
**caractérisée en ce que** le panneau d'habillage (1) est revêtu d'un écran souple (10) qui est couplé à l'unité de commande (3) qui, dans le but de présenter des informations, est adapté pour fournir de l'électricité de manière ciblée à l'écran (10), le panneau d'habillage (1) étant un panneau de plafond.

2. Cabine de passagers selon la revendication 1,
dans laquelle l'écran souple (10) comporte une multitude de diodes électroluminescentes.

3. Cabine de passagers selon la revendication 2,
dans laquelle l'écran souple (10) comporte une multitude de diodes électroluminescentes organiques.

4. Cabine de passagers selon la revendication 3,
dans laquelle l'écran présente un caractère translucide.

5. Cabine de passagers selon la revendication 3,
dans laquelle le panneau d'habillage (1) est directement revêtu des diodes électroluminescentes organiques.

6. Cabine de passagers selon la revendication 3,
dans laquelle un film (17) est collé sur le panneau d'habillage, lequel film (17) comporte à son tour un revêtement de diodes électroluminescentes organiques.

7. Cabine de passagers selon l'une quelconque des revendications précédentes, dans laquelle le panneau d'habillage (1) comporte sur sa surface un évidement plat (2) dans lequel l'écran souple (10) est encastré.

8. Cabine de passagers selon l'une quelconque des revendications précédentes, comportant en outre :
- un ordinateur serveur (4) avec une unité de stockage,
dans laquelle l'ordinateur serveur (4), en accédant à des applications stockées dans l'unité de stockage, fournit des données d'images à l'unité de commande (3).

9. Cabine de passagers selon l'une quelconque des revendications précédentes, dans laquelle l'unité de commande (3) comporte au moins une commande d'écran (5) avec un microprocesseur, qui recalcule les données d'images qui ont été fournies par l'ordinateur serveur (4) pour former un modèle de matrice qui est utilisé comme base pour fournir du courant électrique à l'écran.

10. Cabine de passagers selon l'une quelconque des revendications précédentes, dans laquelle une commande d'écran (5) est respectivement associée à un groupe de panneaux d'habillage afin de générer une présentation visuelle contiguë sur le groupe de panneaux d'habillage.

11. Cabine de passagers selon la revendication 9 ou 10,
dans laquelle chacune des commandes d'écran (5) est couplée à l'ordinateur serveur (4) au moyen d'un bus de données qui est adapté pour mettre en oeuvre une transmission de données en temps réel.

12. Cabine de passagers selon la revendication 11, dans laquelle chaque commande d'écran (5) est adaptée pour demander et recevoir, pour le groupe de panneaux d'affichage, des données d'application individuelles provenant de l'ordinateur serveur (4).

13. Avion comportant une cabine de passagers selon l'invention de l'une quelconque des revendications 1 à 12.

14. Utilisation d'un écran souple pour revêtir un panneau d'habillage dans la cabine de passagers (8) d'un avion pour la présentation visuelle d'effets graphiques lorsque le panneau d'habillage revêtu (1) est couplé à une unité de commande (3) qui, dans le but de présenter des informations, est adaptée pour fournir de l'électricité de manière ciblée à l'écran (10), le panneau d'habillage (1) étant un panneau de plafond.
